# EUROPÄISCHE PATENTSCHRIFT

(11) **EP 0 393 306 B1**
(45) Veröffentlichungstag und Bekanntmachung des Hinweises auf die Patenterteilung: **14.09.1994**
(21) Anmeldenummer: 90100819.3
(22) Anmeldetag: 16.01.1990
(51) Int. Cl.: B27K 3/32

(54) **Wasserlösliches Holzschutzmittel und Verwendung des Mittels für Druck- und/oder Vakuum-Imprägnierverfahren oder Tauchverfahren**
Water soluble wood preservative and its use in pressure and/or vacuum impregnation or immersion processes
Agent protecteur du bois et utilisation de cet agent pour les procédés d'imprégnation à pression et/ou à vide ou par immersion

(30) Priorität: 18.04.1989 DE 3912633
(43) Veröffentlichungstag der Anmeldung: 24.10.1990
(73) Patentinhaber: DESOWAG Materialschutz GmbH, D-40417 Düsseldorf (DE)
(72) Erfinder: Metzner, Wolfgang, Dr., D-4150 Krefeld (DE); Seepe, Detlef, Dr., D-4150 Krefeld 1 (DE)
(74) Vertreter: Lauer, Dieter, Dr.

(56) Entgegenhaltungen:
- DE-A- 1 492 509
- DE-A- 3 339 908

## Beschreibung

Die vorliegende Erfindung betrifft ein wasserlösliches Holzschutzmittel enthaltend oder bestehend aus Ammoniumchromat und/oder Ammoniumdichromat und/oder Chromsäure und komplexen Fluoriden von Kupfer und Zink sowie die Anwendung dieses Mittels.

Holzschutzmittel mit einem Gehalt an Alkalidichromat und/oder -chromaten und/oder Chromsäure in Mengen, die 10 bis 40 Gew.-% Chrom entsprechen, wasserlöslichen Kupfer- und/oder Zinksalzen in Mengen, die 5 bis 30 Gew.-% der genannten Metalle entsprechen, komplexen Fluorverbindungen in Mengen, die 5 bis 30 Gew.-% Fluor entsprechen, mit einem Verhältnis von Chrom zu Fluor von etwa 3 : 6 sind bereits aus der DE-OS 1 492 509 bekannt.

Durch die Einhaltung eines ganz bestimmten Verhältnisses von Chrom zu Fluor gelingt es, die Korrosionsschutzeigenschaften dieses Holzschutzmittels zu verbessern, so daß es den Bedingungen gemäß DIN 52 168 hinsichtlich Korrosionswirkung auf Stahl genügt. Eine Optimierung der Wirksamkeit dieses Mittels gegenüber Moderfäule im Vergleich mit bekannten Mitteln wird nicht angestrebt. Da sich die Wirkung von Zinkhexafluorsilikat als komplexes Fluorid des Zinks in chromhaltigen Holzschutzmitteln nicht als ausreichend erwiesen hat, wurden daher in chromathaltigen Holzschutzmitteln komplexe Fluoride des Kupfers wie Kupferhexafluorsilikat oder Kupferfluorborat eingesetzt.

In neuer Zeit besteht das Bestreben, den Einsatz schwermetallhaltiger Holzschutzmittel aus Gründen des Umweltschutzes ganz zu vermeiden oder zumindest den Schwermetallgehalt des Holzschutzmittels zu verringern.

Aus der DE-A 3339908 ist bereits ein wasserlösliches fixierendes Holzschutzmittel auf der Basis von Salzmischungen bekannt, die Fluor und Chromsalze enthalten und 55 bis 85 Gew.%, bezogen auf die Gesamtmischung eines oder mehrerer Hexafluorsilikate und 5 - 7 Gew.% Chrom in Form von Chromtrioxid oder der äquivalenten Menge eines verträglichen Chromats oder Bichromats enthalten. Als Hexafluorsilikate werden gemäß dieser Patentschrift Magnesium und/oder Zinksilikofluoride eingesetzt. Diese Holzschutzmittelzusammensetzungen haben jedoch keine oder eine beschränkte Wirkung gegenüber der Moderfäule, was gerade für Hölzer, die im Erdkontakt stehen, von sehr großer Bedeutung ist und darüber hinaus ist die Auswaschbarkeit des Mittels nach der Holzschutzbehandlung sehr verbesserungsbedürftig, so daß stärkere Wirkungsverluste eintreten.

Ziel und Aufgabe der vorliegenden Erfindung war es daher, ein wasserlösliches chromathaltiges, Kupfer- und/oder Zinkverbindungen enthaltendes Holzschutzmittel zu finden, das eine gute Wirksamkeit gegenüber Moderfäuleerreger aufweist, wobei gleichzeitig die zur Erzielung der Wirksamkeit erforderliche Aufwandmenge des schwermetallhaltigen Holzschutzmittels pro m| Holzvolumen wesentlich herabgesetzt wird.

Erfindungsgemäß wird diese Aufgabe dadurch gelöst, daß der Chromgehalt des Holzschutzmittels 15 - 28 Gew.-% beträgt und das Atomverhältnis von Cu : Zn in dem als komplexe Fluoride eingesetzten Gemisch aus Kupferhexafluorsilikat und Zinkhexafluorsilikat 1 : 0,59 bis 1 : 1,76, vorzugsweise 1 : 0,93 bis 1 : 1,32, im Holzschutzmittel beträgt.

Nach einer bevorzugten Ausführungsform enthält das wasserlösliche Holzschutzmittel 45 bis 67 Gew.-%, vorzugsweise 60 bis 65 Gew.-% Ammoniumdichromat (berechnet als (NH₄)₂Cr₂O₇)) und das Atomverhältnis von Cu : Zn beträgt 1 : 0,93 bis 1 : 1,32 im Holzschutzmittel.

Das erfindungsgemäße wasserlösliche Holzschutzmitel gelangt in Form einer 0,3 bis 1,95 gew.-%igen, vorzugsweise 0,8 bis 1,9 gew.-%igen, wäßrigen oder Wasser und polare Lösungsmittel enthaltenden Lösung zum Imprägnieren von Holz nach dem Kesseldruck-, Vakuum-Druck, Doppelvakuum-, Doppelvakuum-Druck- oder Tauchverfahren zur Anwendung.

Als polare Lösungsmittel werden bevorzugt polare organisch-chemische Lösungsmittel wie Hydroxy- und/oder Äthergruppen und/oder Ketogruppen und/oder Estergruppen enthaltende Lösungsmittel oder Lösungsmittelgemische eingesetzt. Vorzugsweise gelangen Glykoläther und wasserlösliche Phenole und deren Ester zum Einsatz.

### Beispiele für das erfindungsgemäße Holzschutzmittel

1. 63,0 % (NH₄)₂Cr₂O₇
   18,1 % CuSiF₆·4H₂O
   18,9 % ZnSiF₆·6H₂O
   Atomverhältnis von Cu : Zn wie 1 : 0,93
2. 62,7 % (NH₄)₂Cr₂O₇
   14,9 % CuSiF₆·4H₂O
   22,4 % ZnSiF₆·6H₂O
   Atomverhältnis von Cu : Zn wie 1 : 1,32
3. 45,9 % (NH₄)₂Cr₂O₇
   25,3 % CuSiF₆·4H₂O
   28,8 % ZnSiF₆·6H₂O.
   Atomverhältnis von Cu : Zn wie 1 : 1

Die Grenzwerte der Wirksamkeit nach Auswaschung gegen Moderfäuleerreger liegen im Beispiel 1 bei 4,4 bis 5,0 kg/m| Holz. Zum Vergleich sei auf Beispiel 10 des Holzschutzmittels der erwähnten DE-OS 1 492 502 hingewiesen, wo dieser Grenzwert 11 kg/m| Holz beträgt. Das erfindungsgemäße Mittel ist somit bei herabgesetztem Chromgehalt um den Faktor 2 wirksamer. Das Korrosionsverhalten des erfindungsgemäßen Holzschutzmittels genügt trotz des geringeren Chromgehalts den gestellten Anforderungen.

## Patentansprüche

1. Wasserlösliches Holzschutzmittel enthaltend oder bestehend aus Ammoniumchromat und/oder Ammoniumdichromat und/oder Chromsäure und komplexen Fluoriden von Kupfer und Zink, dadurch gekennzeichnet, daß der Chromgehalt des Holzschutzmittels 15 bis 28 Gew.-% beträgt und das Atomverhältnis von Cu : Zn in dem als komplexe Fluoride eingesetzten Gemisch aus Kupferhexafluorsilikat und Zinkhexafluorsilikat
1 : 0,59 bis 1 : 1,76, vorzugsweise
1 : 0,93 bis 1 : 1,32,
im Holzschutzmittel beträgt.

2. Holzschutzmittel nach Anspruch 1, dadurch gekennzeichnet, daß das Holzschutzmittel
45 bis 67 Gew.-%, vorzugsweise
60 bis 65 Gew.-%,
Ammoniumdichromat (berechnet als (NH₄)₂Cr₂O₇)) enthält und das Atomverhältnis von Kupfer : Zink
1 : 0,93 bis 1 : 1,32
im Holzschutzmittel beträgt.

3. Verwendung eines Holzschutzmittels mit
45 bis 67 Gew.-%, vorzugsweise
60 bis 65 Gew.-%,
Ammoniumdichromat ((berechnet als (NH₄)₂Cr₂O₇)) und Kupferhexafluorsilikat und Zinkhexafluorsilikat in einem Atomverhältnis von Cu zu Zn von
1 : 0,93 bis 1 : 1,32
in Form einer
0,3 bis 1,95gew.-%igen, vorzugsweise
0,8 bis 1,9gew.-%igen,
wäßrigen oder Wasser und polare Lösungsmittel enthaltenden Lösung zum Imprägnieren von Holz und Holzwerkstoffen nach dem Kesseldruck-, Vakuum-Druck-, Vakuum-Vakuum-, Vakuum-Vakuum-Druck- oder Tauchverfahren.

## Claims

1. A water-soluble wood protection agent containing or consisting of ammonium chromate and/or ammonium dichromate and/or chromic acid and complex fluorides of copper and zinc, characterised in that the chromium content of the wood protection agent is 15 to 28% by weight and the atomic ratio of Cu : Zn in the mixture of copper hexafluorosilicate and zinc hexafluorosilicate used as the complex fluorides is
1 : 0.59 to 1 : 1.76, preferably
1 : 0.93 to 1 : 1.32,
in the wood protection agent.

2. A wood protection agent according to Claim 1, characterised in that the wood protection agent contains
45 to 67% by weight, preferably
60 to 65% by weight,
ammonium dichromate (calculated as (NH₄)₂Cr₂O₇) and the atomic ratio of copper : zinc is
1 : 0.93 to 1 : 1.32
in the wood protection agent.

3. The use of a wood protection agent containing
45 to 67% by weight, preferably
60 to 65% by weight,
ammonium dichromate (calculated as (NH₄)₂Cr₂O₇) and copper hexafluorosilicate and zinc hexafluorosilicate in an atomic ratio of Cu to Zn of
1 : 0.93 to 1 : 1.32
in the form of a
0.3 to 1.95% by weight, preferably
0.8 to 1.9% by weight,
aqueous solution or a solution containing water and polar solvents for the impregnation of wood and timber materials according to the boiler pressure, vacuum pressure, vacuum-vacuum, vacuum-vacuum-pressure or dipping processes.

## Revendications

1. Agent hydrosoluble protecteur du bois, cet agent contenant, ou consistant en, du chromate d'ammonium et/ou du dichromate d'ammonium et/ou de l'acide chromique et des fluorures complexes de cuivre et de zinc, caractérisé en ce que la teneur en chrome de l'agent protecteur du bois est de 15 à 28 % en poids et en ce que le rapport atomique entre Cu et Zn, dans le mélange, utilisé à titre de fluorures complexes, d'hexafluorosilicate de cuivre et d'hexafluorosilicate de zinc vaut :
1 : 0,59 à 1: 1,76, avantageusement
1 : 0,93 à 1: 1,32
dans l'agent protecteur du bois.

2. Agent protecteur du bois selon la revendication 1, caractérisé en ce que l'agent protecteur du bois contient
45 à 67 % en poids, avantageusement
60 à 65 % en poids
de dichromate d'ammonium (calculé en (NH₄)₂Cr₂O₇)) et en ce que le rapport atomique entre le cuivre et le zinc vaut
1:0,93 à 1:1,32
dans l'agent protecteur du bois.

3. Utilisation d'un agent protecteur du bois, comportant
45 à 67 % en poids, avantageusement
60 à 65 % en poids
de dichromate d'ammonium ((calculé en (NH₄)₂Cr₂O₇)), et de
l'hexafluorosilicate de cuivre, et de l'hexafluorosilicate de zinc selon un rapport atomique entre le cuivre et le zinc valant de
1 : 0,93 à 1: 1,32,
sous forme d'une solution aqueuse, ou d'une solution contenant de l'eau et des solvants polaires, à
0,3 jusqu'à 1,95 % en poids, avantageusement
0,8 à 1,9 % en poids,
pour imprégner le bois et les matériaux en bois selon le procédé de traitement la sous pression dans une chaudière, le procédé sous vide et sous pression, le procédé sous vide et sous vide, le procédé sous vide - sous vide - sous pression ou le procédé par immersion.
